**Europäisches Patentamt**

**European Patent Office**

**Office européen des brevets**

(11) Veröffentlichungsnummer : **0 367 768 B1**

(12) **EUROPÄISCHE PATENTSCHRIFT**

(45) Veröffentlichungstag der Patentschrift :
13.03.91 Patentblatt 91/11

(51) Int. Cl.⁵ : **F16H 63/44**

(21) Anmeldenummer : 88904220.6

(22) Anmeldetag : 18.05.88

(86) Internationale Anmeldenummer :
**PCT/EP88/00424**

(87) Internationale Veröffentlichungsnummer :
**WO 88/09452 01.12.88 Gazette 88/26**

(54) **STEUEREINRICHTUNG.**

(30) Priorität : 27.05.87 DE 3717935

(43) Veröffentlichungstag der Anmeldung :
16.05.90 Patentblatt 90/20

(45) Bekanntmachung des Hinweises auf die
Patenterteilung :
13.03.91 Patentblatt 91/11

(84) Benannte Vertragsstaaten :
DE IT

(56) Entgegenhaltungen :
EP-A- 0 071 353
EP-A- 0 122 014
DE-A- 1 951 428
US-A- 2 582 895

(73) Patentinhaber : **ZAHNRADFABRIK FRIEDRICHSHAFEN AKTIENGESELLSCHAFT**
**Löwentaler Strasse 100 Postfach 2520**
**W-7990 Friedrichshafen 1 (DE)**

(72) Erfinder : **HOLDENRIED, Willy**
**Auf dem Ruhbühl 8**
**W-7997 Immenstaad (DE)**

**Beschreibung**

Die Erfindung betrifft eine Steuereinrichtung für ein in Gruppenbauweise angeordnetes Zahnräderwechselgetriebe nach dem Oberbegriff von Anspruch 1.

Eine solche Einrichtung ist aus der EP-A-0052 794 bekannt Wie in Fig. 3 dieser Schrift dargestellt, werden mit dem Handschalthebel 20 vier Gänge des Grundgetriebes vom Zahnräderwechselgetriebe nach dem H-Schaltbild von Hand mechanisch geschaltet. Weiter erfolgt über einen zweiten Schalthebel 40 die Umschaltung von zwei Vorwärts- und einer Rückwärtsganggruppe.

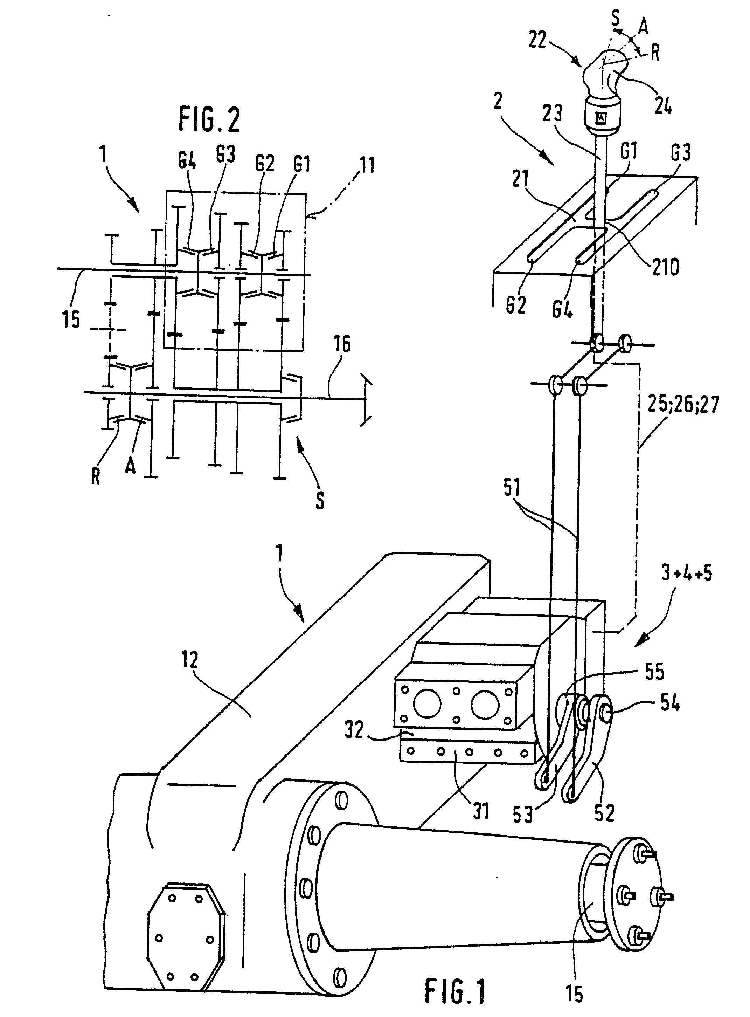

Solche Einrichtungen oder, wie in Fig. 1 und 2 dargstellt, mit einer lastschaltbaren Splittung der Gänge 1 bis 4 in eine schnelle oder langsamere Fahrt haben sich bei Ackerschleppern bewährt.

Die mechanische Zwei-Hebelschaltung hat jedoch im Fahrerhaus einen hohen Platzbedarf und entspricht allgemein nicht mehr den Anforderungen, die bei modernen Ackerschleppern gestellt werden.

Aus der EP-A-0 122 014 ist eine Schalteinrichtung für ein Hauptgetriebe und mehrere Gruppengetriebe bekannt, in der das Hauptgetriebe mechanisch von Hand über ein bekanntes H- Schaltbild geschaltet wird. Die hilfskraftbetätigte Schaltung der Rückwärtsganggruppe wird über eine am Handschalthebel angeordnete und allgemein bekannte Verstelleinrichtung bewirkt, während zur Betätigung der Straßen- und Ackergruppe auch der Handschalthebel verstellt werden muß, um eine hilfskraftbetätigte Schaltung dieser Gruppen auszulösen.

Mit dieser Einrichtung ist zwar der bisher nötige zweite Handschalthebel nicht mehr erforderlich, die gemeinsame Handschaltung des Grundgetriebes und die hilfskraftbetätigte Schaltung der Straßen- und Ackergruppe über die unterschiedliche Betätigung des Handschalthebels ist jedoch nicht sehr übersichtlich und führt leicht zu Fehlschaltungen. Eine Aussage, wie die Magnetventile mit den zugeordneten Hilfskraftbetätigungseinrichtungen und die Übertragungseinrichtung für die Handschaltungen am Getriebe angeordnet sind, ist dieser Schrift nicht zu entnehmen.

Es ist deshalb Aufgabe der Erfindung, eine Schalteinrichtung nach dem Oberbegriff von Anspruch 1 mit möglichst einfachen Mitteln weiterzuentwickeln. Insbesondere soll die Schalteinrichtung in der Bedienung übersichtlicher und in der Übertragung zum Getriebe kompakter werden. Dabei soll jedoch kein Eingriff im Getriebe erfolgen und die Gänge des Hauptgetriebes weiterhin mechanisch geschaltet werden und es soll auch eine Nachrüstung vorhandener Ackerschlepper möglich sein.

Diese Aufgabe wird mit den kennzeichnenden Merkmalen von Anspruch 1 erfüllt.

Durch die klare Trennung der Handschaltung des Grundgetriebes über den Schalthebel selbst im bekannten H- Schaltbild und die Auslösung der hilfskraftbetätigten Schaltung über nur eine Verstelleinrichtung für drei Gruppenschaltungen sind Fehlschaltungen weitestgehend ausgeschlossen. Infolge der Zusammenfassung aller für die Hilfskraftschaltung der Gruppen und Handschaltung des Grundgetriebes notwendigen Einrichtungen in ein Schaltgerät gibt es eine Vereinfachung der Schaltanlage und keine Veränderung im Getriebe, so daß die mit einer reinen Handschaltung ausgestatteten Getriebe schnell und einfach umgerüstet werden können. Dazu müssen nur die angeflanschten zwei Verstelleinrichtungen gegen ein Schaltgerät und die Konsole im Fahrerhaus ausgewechselt werden. Die elektrischen und hydraulischen Anschlüsse des Schaltgerätes sind über flexible Leitungen möglich und die Betätigungsanschlüsse für die mechanische Handschaltung können im Prinzip unverändert bestehenbleiben und sind deshalb leicht anschließbar.

Zur Minimierung der Baugröße sind für die drei Gruppenumschaltungen nur zwei Verstellkolben im Schaltgerät angeordnet und alle für die Steuerung nötigen Schieber und Ventile einschließlich der Magnetventile sind in einem elektrohydraulischen Steuerblock mit einem Steuergehäuse und einem als Kanalplatte ausgebildeten Deckel für die Druckleitungen angeordnet. Dadurch ergeben sich neben der kompakten Bauweise des gesamten Schaltgerätes im Deckel für das Steuergehäuse sehr kurze Ölführungs- bzw. Druckkanäle. Durch die Anordnung einer Dichtplatte zwischen dem Steuergehäuse und dem Deckel in Verbindung mit je einem Entlastungskanal im Steuergehäuse und Deckel kann auf eine zusätzliche Ölauffangwanne, wie sie z. B. bei Steuergehäusen von Automatgetrieben bekannt und üblich ist, verzichtet werden. Wenn die Kolbenräume der Verstellkolben im Schaltgerät infolge des hohen Ölniveaus im entlüfteten Zustand sich nicht entleeren können, sind bei einer Umschaltung kurze Schaltzeiten erzielbar, weil die relativ großen Kolbenräume, die infolge der erforderlichen Verstellkräfte nötig sind, nicht erst wieder befüllt werden müssen. Auch die gleichzeitige Benutzung des Ölsumpfes vom Getriebe für das angeflanschte Schaltgerät über einen vergrößerten Durchgang für eine der Drehwellen bringt eine Vereinfachung, weil keine gesonderte Rücklaufleitung nötig ist.

Infolge der von außen zugänglichen Notbetätigung ist es möglich, bei Stromausfall über jeweils eine Einrichtung die Vorwärtsfahrt in der Straßengruppe und die Rückwärtsfahrt mechanisch- hydraulisch zu schalten, wobei, wenn nötig, durch die definierte Betätigung von beiden Notfahreinrichtungen auch die Ackergrupppe schaltbar ist. Durch die Anbringung einer einfachen Anlaßsperre am Schaltgerät ergibt sich eine weitere Vereinfachung, dazu ist der Schalter auch noch leicht zugänglich.

Weitere Einzelheiten der Erfindung werden anhand von Zeichnungen und einem Ausführungsbeispiel erläutert. Es zeigen :

Fig. 1 eine Schalteinrichtung mit Schaltkonsole im Fahrerhaus und Schaltgerät am Getriebe ;

Fig. 2 eine schematische Darstellung des Zahnräderwechselgetriebes ;

Fig. 3 und 3A ein Steuerschema für die Gruppenschaltungen ;

Fig. 4 einen Schnitt durch das Steuergehäuse vom elektrohydraulischen Steuerblock ;

Fig. 5 das Schaltgerät in Ansicht, teilweise geschnitten.

In Fig. 1 ist die im Fahrerhaus angeordnete Schaltkonsole 2 mit einem Handschalthebel 23 sowie das mit einer Antriebsachse 15 direkt verbundene Zahnräderwechselgetriebe 1 sowie das daran angeflanschte Schaltgerät 3 + 4 + 5 dargestellt. Der Handschalthebel 23 zum mechanischen Schalten der Gänge im Grundgetriebe 11 ist in der Schaltkulisse 21 nach dem H- Schaltbild aus der Neutrallage 210 in die Gassen der Gänge G1/G2 ; G3/G4 und in die Gänge selbst verstellbar. Dabei ist der Handschalthebel 23 in bekannter Weise über ein z. B. Übertragungsgestänge 51 mit der Übertragungseinrichtung 5 verbunden. In diesem Beispiel sind zwei Hebel 52, 53, die mit einer Welle 54 und einer Hohlwelle 55 fest verbunden sind, und zwei Gestänge 51, den Gassen G1/G2 und G3/G4 zugeordnet, dargestellt. Am Handschalthebel 23 ist im Bereich des Griffes 24 noch eine Verstelleinrichtung 22 für die Gruppenumschaltung angeordnet. Durch Drehen des Griffes – infolge einer mechanischen Verriegelung nur in der Neutralstellung 210 des Handschalthebels 23 möglich – können über einen elektrischen Schalter z. B. die Acker- A, Straßen- S und Rückwärtsganggruppe R über drei Magnetventile, die im Steuergehäuse 31 angeordnet sind, betätigt werden, wobei je ein Magnetventil jeweils einer Gruppe zugeordnet ist. Dadurch wird verhindert, daß bei Stromausfall eine für den Fahrer überraschende Gruppenumschaltung erfolgt, wobei die Beibehaltung der Straßengruppe oder eine Umschaltung in diese Gruppe vorgesehen ist.

In der schematischen Darstellung des Getriebes 1 nach Fig. 2 sind im Bereich des Grundgetriebes 11 die Schaltkupplungen der Gänge G1 bis G4, die in bekannter Weise über den Handschalthebel 23 geschaltet werden, erkennbar. Mit R, A und S sind die über Hilfskraft betätigten Schaltkupplungen für die Gruppenschaltung bezeichnet. 15 und 16 sind die Antriebs- und Abtriebswellen.

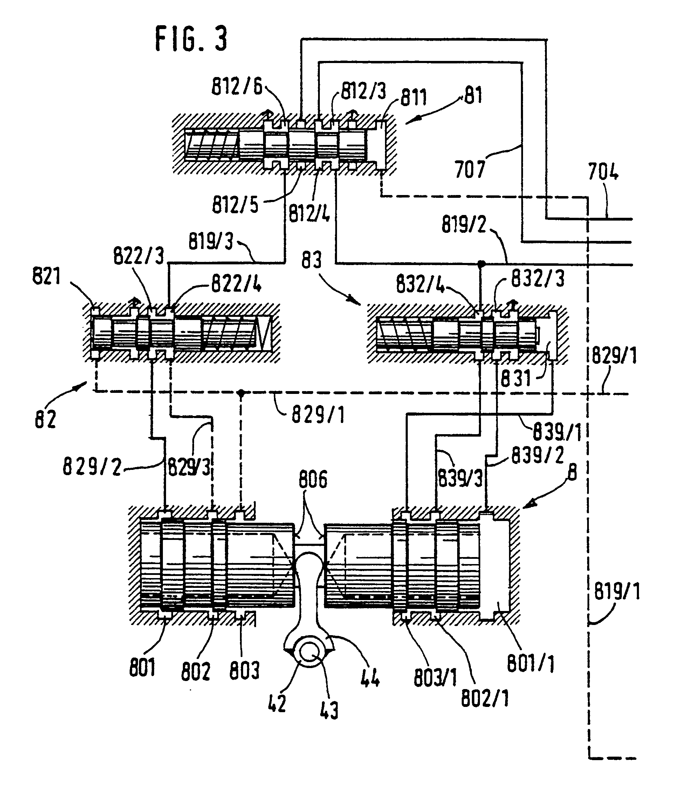

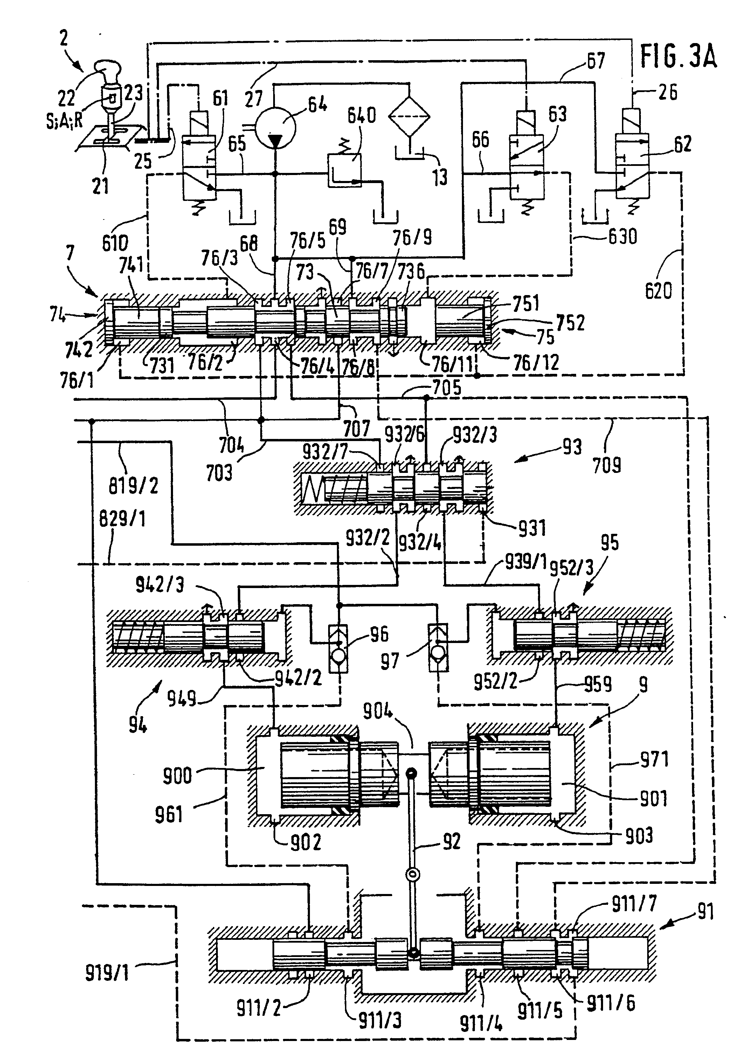

In dem Steuerschema nach Fig. 3 ist die Verstelleinrichtung 22 an der Schaltkonsole 2 gemäß den Schaltstellungen S = Straße, A = Acker, R = Rückwärts über elektrische Leitungen 25, 26, 27 mit je einem Magnetventil 61, 62, 63 verbunden, die einen Wählschieber 7 in eine Mittelstellung und je eine Endstellung verschieben, wobei das

– Magnetventil 61 der Rückwärtsgangruppe,
– Magnetventil 62 der Ackergruppe,
– Magnetventil 63 der Straßengruppe

zugeordnet ist. Dazu ist eine Druckmittelquelle – Pumpe 64 -, die aus einem Rücklaufbehälter – Sumpf 13 des Getriebegehäuses 12, Fig. 2 – Druckmittel ansaugt, in Verbindung mit einem Überdruckventil 640 über die Leitungen 65, 66, 67 mit den Magnetventilen 61, 62, 63 und über die Leitungen 68, 69 direkt mit dem vierten und achten Ringraum 76/4, 76/8 des Wählschiebers 7 verbunden. Zu den beiden äußeren Ringräumen 76/1 und 76/12 führt vom Magnetventil 62 die Leitung 620 zu dem zweiten Ringraum 76/2, vom Magnetventil 61 die Leitung 610 und zum elften Ringraum 76/11 vom Magnetventil 63 die Leitung 630. Der Wählschieber 7 hat einen mittleren Kolbenschieber 73 mit sechs Kolben 731 bis 736 und fünf dazwischen angeordnete Einschnitte mit unterschiedlicher Länge sowie zwei äußere Kolbenschieber 74, 75 mit jeweils nur einem Kolben 741, 751 und je einem Bund 742, 752, der in die äußeren Ringräume 76/1 und 76/12 hineinragt. Mit der Mittelstellung des Wählschiebers 7 wird ein Dreistellungs-Verstellkolben 9 über einen Steuerschieber 91 und einen Umlenkhebel 92 in eine linke Endstellung – Ackergruppe A – und ein Zweistellungs- Verstellkolben 8 direkt in die Aus-Stellung (rechte Endstellung) verschoben. Der linken Endstellung des Wählschiebers 7 – Straßengruppe – ist die Mittelstellung – Neutralstellung – des Dreistellungs-Verstellkolbens 9 zugeordnet und der Zweistellungs- Vestellkolben 8 wird in die geschaltete Stellung – linke Endstellung = Straßengruppe – gebracht. In der rechten Endstellung des Wählschiebers 7 – Rückwärtsganggruppe – wird über das Druckmittel der Dreistellungs-Verstellkolben gleichfalls in die rechte Endstellung – Rückwärtsganggruppe – gebracht und der Zweistellungs-Verstellkolben 8 ist bereits vorher in die Aus-Stellung – rechte Endstellung – verschoben worden. Unmittelbar nach der Verstellung der Verstellkolben 8, 9 werden die Druckräume derselben entlüftet. Zur Verstellung und Entlüftung sind in Verbindung mit dem Zweistellungs- Verstellkolben 8 ein Kommandoschieber 81 und zwei Druckabschaltventile 82, 83 und in Verbindung mit dem Dreistellungs-Verstellkolben 9 der Steuerschieber 91, der über einen Umlenkhebel 92 mit diesem verbunden ist, und ein Kommandoschieber 93 sowie zwei Druckabschalt- 94, 95 und, diesem

zugeordnet, zwei Wechselventile 96, 97, angeordnet. Zwischen dem Wählschieber 7 und dem Steuerschieber 91, den Kommandoschiebern 81, 93, Druckabschalt- 82, 83, 94, 95 und Wechselventilen 96, 97 und den Verstellkolben 8, 9 und zwischen dieser- untereinander bestehen folgende Verbindungen über Druckleitungen :

– Leitung 703 vom dritten Ringraum 76/3 und Leitung 707 vom siebten Ringraum 76/7 des Wählschiebers 7 zum siebten Ringraum 932/7 des Kommandoschiebers 93, zum vierten Ringraum 812/4 des Kommandoschiebers 81 und zum zweiten Ringraum 911/2 des Steuerschiebers 91,

– Leitung 704 vom vierten Ringraum 76/4 des Wählschiebers 7 zum fünften Ringraum 812/5 des Kommandoschiebers 81,

– Leitung 705 vom fünften Ringraum 76/5 des Wählschiebers 7 zum vierten Ringraum 932/4 des Kommandoschiebers 93 und zum fünften Ringraum 911/5 des Steuerschiebers 91,

– Leitung 709 vom neunten Ringraum 76/9 des Wählschiebers 7 zum sechsten Ringraum 911/6 des Steuerschiebers 91.

– Leitung 819/1 vom ersten stirnseitigen Ringraum 811 des Kommandoschiebers 81 zum siebten Ringraum 911/7 des Steuerschiebers 91,

– Leitung 829/1 vom ersten stirnseitigen Ringraum 821 des Druckabschaltventils 82 zum ersten stirnseitigen Ringraum 931 des Kommandoschiebers 93 und zum dritten linksseitigen Ringraum 803 vom Verstellkolben 8,

– Leitung 819/2 vom dritten Ringraum 812/3 vom Kommandoschieber 81 zum vierten Ringraum 832/4 vom Druckabschaltventil 83 und zu je einem seitlichen Eingang beider Wechselventile 96, 97,

– Leitung 819/3 vom sechsten Ringraum 812/6 vom Kommandoschieber 81 zum vierten Ringraum 822/4 vom Druckabschaltventil 82,

– Leitung 829/2 vom dritten Ringraum 822/3 vom Druckabschaltventil 82 zum ersten linksseitigen Ringraum 801 vom Verstellkolben 8,

– Leitung 829/3 vom vierten Ringraum 822/4 vom Druckabschaltventil 82 zum zweiten linksseitigen Ringraum 802 vom Verstellkolben 8,

– Leitung 839/1 vom ersten stirnseitigen Ringraum 831 vom Druckabschaltventil 83 zum dritten rechtsseitigen Ringraum 803/1 vom Verstellkolben 8,

– Leitung 839/2 vom dritten Ringraum 832/3 vom Druckabschaltventil 83 zum ersten rechtsseitigen Ringraum 801/1 vom Verstellkolben 8,

– Leitung 839/3 vom vierten Ringraum 832/4 vom Druckabschaltventil 83 zum zweiten rechtsseitigen Ringraum 802/1 vom Verstellkolben 8,

– Leitung 939/1 vom dritten Ringraum 932/3 vom Kommandoschieber 93 zum zweiten Ringraum 952/2 vom Druckabschaltventil 95,

– Leitung 939/2 vom sechsten Ringraum 932/6 vom Kommandoschieber 93 zum zweiten Ringraum 942/2 vom Druck abschaltventil 94,

– Leitung 961 von einem seitlichen Eingang des Wechselventils 96 zum dritten Ringraum 911/3 des Steuerschiebers 91,

– Leitung 971 von einem seitlichen Eingang des Wechselventils 97 zum vierten Ringraum 911/4 des Steuerschiebers 91,

– Leitung 949 vom dritten Ringraum 942/3 vom Druckabschaltventil 94 zum linken Ringraum 902 des Verstellkolbens 9,

– Leitung 959 vom dritten Ringraum 952/3 vom Druckabschaltventil 95 zum rechten Ringraum 903 des Verstellkolbens 9.

In die Nut 806 am Verstellkolben 8 greift ein mit einer Hohlwelle 42 fest verbundener Hebel 44 ein, so daß bei der Verschiebung des Verstellkolbens die Hohlwelle 42 definiert in zwei Endstellungen gedreht wird.

In die Nut 904 vom Verstellkolben 9 greift neben dem Umlenkhebel 92 noch ein nicht dargestellter Hebel ein, so daß bei der Verstellung des Dreistellungs-Kolbens 9 die Welle 43 in drei definierte Stellungen verdreht wird, wobei die beiden äußeren Stellungen der Ackergruppe A und Rückwärtsganggruppe R zugeordnet sind.

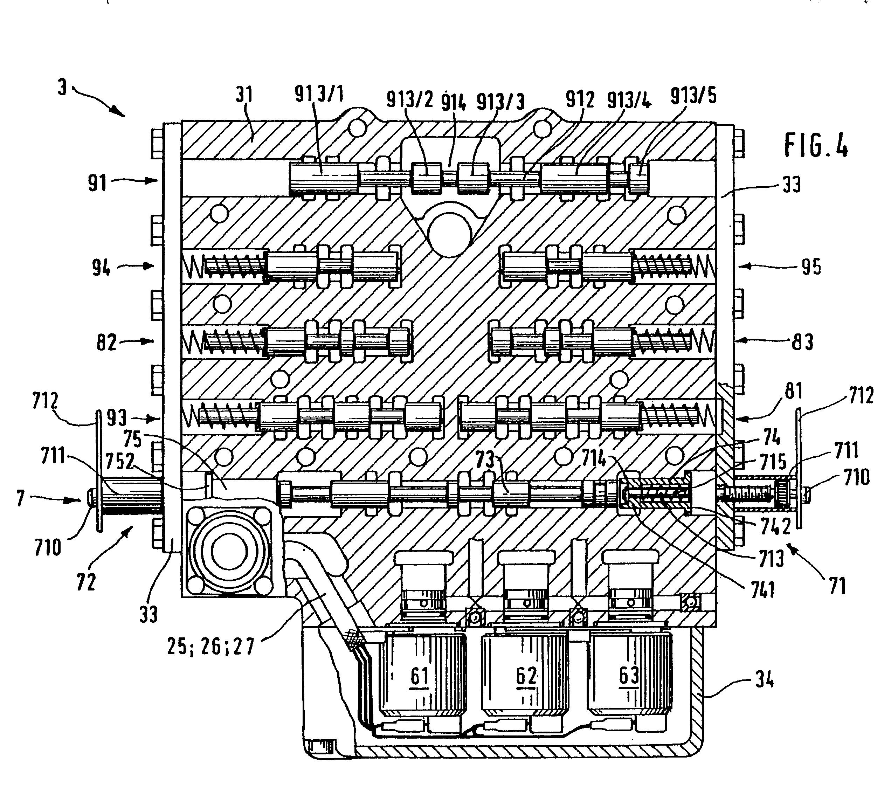

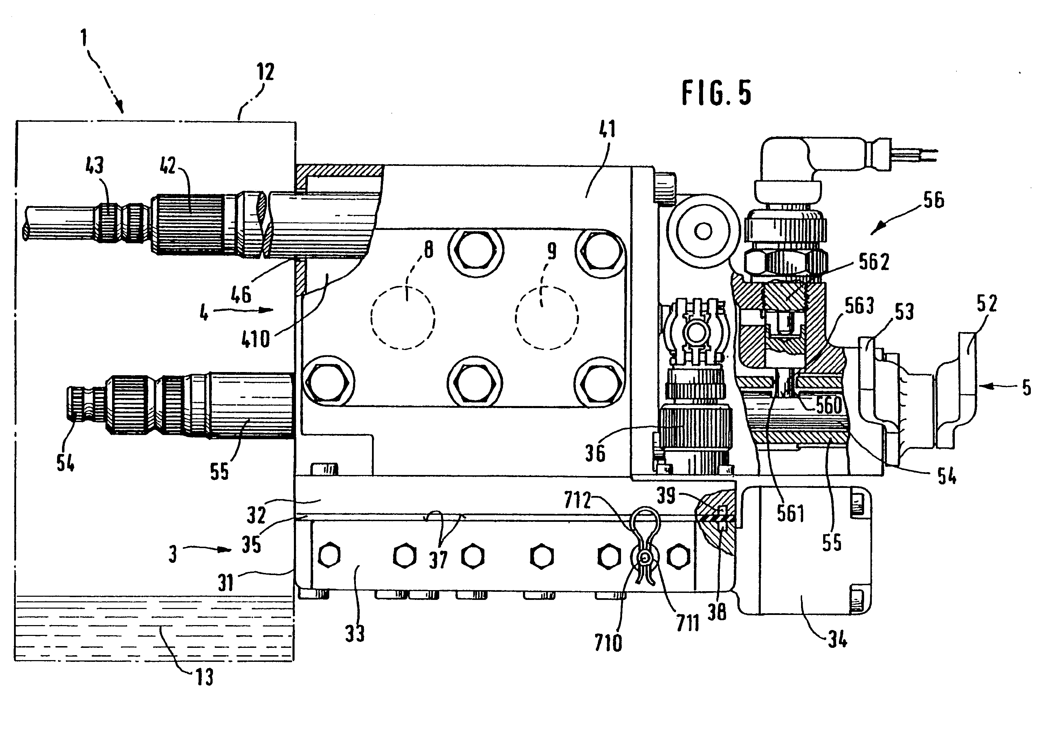

Im Steuergehäuse 31 des elektro-hydraulischen Steuerblockes 3 nach Fig. 4 sind die Magnetventile 61, 62, 63 sowie der Wählschieber 7, der Steuerschieber 91 sowie die Kommandoschieber 81, 93 und die Druckabschaltventile 82, 83, 94, 95 angeordnet. In die Nut 914 im Kolbenschieber 912 zwischen den Kolben 913/2 und 913/3 greift der in Fig. 3 gezeigte Umlenkhebel 92 ein. Am Wählschieber 7 sind beidseitig noch die mechanisch wirkenden Notbetätigungen 71, 72 angeordnet, mit deren Hilfe bei Ausfall der Elektrik oder der Magnetventile der Wählschieber 7 verstellt werden kann. Koaxial zum Wählschieber 7 ist beidseitig in den Abdeckplatten 33 je eine Stellschraube 710 angeordnet und über eine Hülse 711 und eine Sicherung 712 gegen unbeabsichtigte Verdrehung gesichert. Weiter gehört zur mechanischen Notbetätigung ein der jeweiligen Stellschraube zugeordneter Übertragungsbolzen 713, der in einer abgesetzten Bohrung im jeweiligen äußeren Kolbenschieber 74, 75 über eine zweite Sicherung 714 gegen den Druck einer Feder 715 stirnseitig bündig gehalten wird. Über diese beiden Einrichtungen zur Notbetätigung 71, 72 kann der mittlere Kolbenschieber 73 in die dargestellte Mittellage gebracht werden – die der Verstellung in die Ackergruppe entspricht, wenn die beiden Stellschrauben 710 die äußeren Kolbenschieber 74, 75 bis auf Anschlag am Bund 742, 752 derselben bringen. Soll die Straßen- S bzw. Rückwärtsganggruppe R eingestellt werden, so ist nur eine Sicherung 712 zu lösen und nur eine Stellschraube ist bis zum Anschlag einzudrehen. Dabei wird zunächst der zugeordnete äußere Kolbenschieber, wie beschrieben, bis zur Anlage am Bund 742, 752 verstellt, beim weiteren Eindrehen der Stellschraube 710 drückt der Übertragungsbolzen 713 den mittleren Kolbenschieber 73 und den jeweiligen, entgegengesetzt angeordneten äußeren Kolbenschieber 74, 75 in die jeweilige Endlage, in der Bund 742, 752 an der Abdeckplatte 33 anliegt. Auf diese Weise können notfalls alle drei Gruppen A, S, R geschaltet werden. Das Schaltgerät nach Fig. 5, das an das Getriebegehäuse 12 angeflanscht ist, setzt sich aus dem elektro-hydraulischen Steuerblock 3, der hilfskraftbetätigten Verstelleinrichtung 4 und der Übertragungseinrichtung 5 für das mechanische Schalten der Gänge zusammen. Die Magnetventile werden, wie auch Fig. 4 zeigt, mit einer Abdeckung 34 geschützt. Im Deckel 32 sind alle Leitungen nach Fig. 3 als Kanäle und die beiden Wechselventile 96, 97 eingearbeitet und werden von einer Dichtplatte 35, die zwischen Steuergehäuse 31 und Deckel 32 angeordnet ist, abgedeckt. Im Gehäuse 41 der Verstelleinrichtung 4 befinden sich die Verstellkolben 8, 9 mit der Hohlwelle 42 und Welle 43. Die Verschiebebewegung der Verstellkolben 8, 9 wird über je einen Hebel, z. B. 44 nach Fig. 3, der jeweils in die Nuten 806 und 904 dieser Verstellkolben eingreift, in eine Drehbewegung der Hohlwelle 42 und Welle 43 umgewandelt. Diese ragen in das Getriebegehäuse 12 hinein und verschieben über je einen Hebel direkt oder über Schubstangen die zugeordneten Schaltkupplungen R, A und S nach Fig. 2. Im Schaltgehäuse 41 ist noch die Übertragungseinrichtung 5 gelagert, mit der über zwei Hebel 52, 53 die vom Übertragungsgestänge 51 kommende Schaltbewegung für die Gänge G1 bis G4 über die Hohlwelle 55 und Welle 54 auf die Schaltkupplungen G1 bis G4 übertragen wird. In Verbindung mit der Hohlwelle 55 und der Welle 54 ist noch eine mechanisch-elektrische Anlaßsperre 56 angeordnet. Dazu ist an der Welle 54 eine Fläche 560 angearbeitet und in der gleichen Ebene, bis auf diese Fläche, die Hohlwelle 55 geschlitzt – Schlitz 561. Ein mit einem Schalter 562 zusammenwirkender Fühlbolzen 563 ist in dem Schlitz 561 angeordnet und ragt in der Neutrallage 210 des Schalthebels 23, da beide Hebel 52, 53 sich in einer mittleren Stellung befinden, bis auf die Fläche 560 in den Schlitz hinein. Ist ein Gang G1 bis G4 eingelegt, verdreht sich entweder die Welle 54 oder die Hohlwelle 55, so daß der Fühlbolzen 563 gehoben und der Schalter 562 betätigt wird. Es kann also nur angelassen werden, wenn kein Gang eingelegt ist und der Schalthebel 23 sich in der Neutrallage 210 befindet. Mit 36 ist noch ein Stecker bezeichnet, über den die elektrischen Leitungen 25, 26, 27 von der Schaltkonsole 2 an die Magnetventile 61, 62, 63 angeschlossen werden. In einem definierten Abstand von der Außenkante sind an der Dichtfläche 37 sowohl vom Steuergehäuse 31 wie vom Deckel 32 rundum laufende Entlastungskanäle 38, 39 angeordnet, die eine Verbindung zum Innenraum 410 des Schaltgehäuses haben, das Lecköl auffangen und es in diesen Innenraum entleeren. Der gesamte Innenraum und auch die entlüfteten Druckräume der Verstellkolben sind mit Öl gefüllt, weil der Überlauf 46 zum Sumpf 13 des Getriebegehäuses 12 sehr hoch angeordnet ist, z. B. in Form eines vergrößerten Durchbruches für die Hohlwelle 42.

## Ansprüche

1. Schalteinrichtung für ein in Gruppenbauweise angeordnetes Zahnräderwechselgetriebe (1), in dem sowohl die Gänge (G1 bis G4) des Grundgetriebes (11) wie auch die Gruppengetriebe (S, A, R) über Schaltmuffen geschaltet werden, wobei die im Grundgetriebe (11) gebildeten Gänge (G1 bis G4) in einem H-Schaltbild (21) von Hand mechanisch geschaltet werden und eine zusätzliche Umschaltung in zwei Vorwärts- (S, A) und einer Rückwärtsganggruppe (R), vorrangig bei einem Ackerschlepper, erfolgt und daß die hilfskraftbetätigten Gruppenschaltungen über Stellkolben (8, 9) und Magnetventile (61, 62, 63) erfolgen, die über mindestens eine Verstelleinrichtung (22), die am oder in Verbindung mit dem Handschalthebel (23) angeordnet ist, ausgelöst werden, **dadurch gekennzeichnet,** daß eine Straßen- (S), eine Ackergruppe (A) sowie die Rückwärtsganggruppe (R) mit nur einer Verstelleinrichtung (22), die am Handschalthebel (23) angeordnet ist, geschaltet werden und daß nur ein Schaltgerät (3 + 4 + 5) am Getriebe (1) angeordnet ist, das aus einem elektro-hydraulischen Steuerblock (3), einer hilfskraftbetätigten Verstelleinrichtung (4) für die Schaltung der Gruppen und einer Übertragungseinrichtung (5) für die nach dem H-Schaltbild von Hand geschalteten Gänge im Grundgetriebe (11) besteht.

2. Schalteinrichtung nach Anspruch 1, **dadurch gekennzeichnet,** daß mit der Verstelleinrichtung (22) Magnetventile (61, 62, 63) geschaltet werden, über die ein Wählschieber (7), der mit einer Druckmittelquelle (64) dauernd verbunden ist, über Druckmittel in je eine End- und in die Mittelstellung verschoben wird und daß jeder Stellung der Verstelleinrichtung (22) und jeder Stellung des Wählschiebers (7) ein Magnetventil (61, 62, 63) zugeordnet ist.

3. Schalteinrichtung nach Anspruch 2, **dadurch gekennzeichnet,** daß über den Dreistellungs-Wählschieber (7) ein Zweistellungs-Verstellkolben (8) für die Ein- und Ausschaltung der Straßengruppe (S) direkt und ein Dreistellungs-Verstellkolben (9) für eine Acker- (A) und eine Rückwärtsganggruppe (R) sowie eine Mittel- oder Nullstellung über einen Steuerschieber (91) und einen Umlenkhebel (92) verstellt werden.

4. Schalteinrichtung nach Anspruch 3, **dadurch gekennzeichnet, daß**
– dem Zweistellungs-Verstellkolben (8) noch ein Kommandoschieber (81) und jeder Endstellung je ein Druckabschaltventil (82, 83) und
– dem Dreistellungs-Verstellkolben (9) ein Kommandoschieber (93) und jeder Endstellung je ein Druckabschalt- (94, 95) und Wechselventil (96, 97) zugeordnet ist und daß für die Entlüftung beider außenliegenden Kolbenräume (900, 901) in der Mittelstellung beide Wechsel- (96, 97) und Druckabschaltventile (94, 95) geschaltet sind.

5. Schalteinrichtung nach Anspruch 4, dadurch **gekennzeichnet**, daß folgende Verbindungen über Druckleitungen bestehen :

– Leitungen (65, 66, 67) von Druckmittelquelle (64) zu den Magnetventilen (61, 62, 63),

– Leitungen (68, 69) von Druckmittelquelle (64) zum vierten (76/4) und achten (76/8) Ringraum vom Wählschieber (7),

– Leitungen (610, 630) von den Magnetventilen (61, 63) zum zweiten (76/2) und elften Ringraum (76/11),

– Leitung (620) vom Magnetventil (62) zu den beiden stirnseitigen Ringräumen (76/1, 76/12) vom Wählschieber (7),

– Leitung (703) vom dritten Ringraum (76/3) und Leitung (707) vom siebten Ringraum (76/7) des Wählschiebers (7) zum siebten Ringraum (932/7) des Kommandoschiebers (93), zum vierten Ringraum (812/4) des Kommandoschiebers (81) und zum zweiten Ringraum (911/2) des Steuerschiebers (91),

– Leitung (704) vom vierten Ringraum (76/4) des Wählschiebers (7) zum fünften Ringraum (812/5) des Kommandoschiebers (81),

– Leitung (705) vom fünften Ringraum (76/5) des Wählschiebers (7) zum vierten Ringraum (932/4) des Kommandoschiebers (93) und zum fünften Ringraum (911/5) des Steuerschiebers (91),

– Leitung (709) vom neunten Ringraum (76/9) des Wählschiebers (7) zum sechsten Ringraum (911/6) des Steuerschiebers (91),

– Leitung (819/1) vom ersten stirnseitigen Ringraum (811) des Kommandoschiebers (81) zum siebten Ringraum (911/7) des Steuerschiebers (91),

– Leitung (829/1) vom ersten stirnseitigen Ringraum (821) des Druckabschaltventils (82) zum ersten stirnseitigen Ringraum (931) des Kommandoschiebers (93) und zum dritten linksseitigen Ringraum 803 vom Verstellkolben (8),

– Leitung (819/2) vom dritten Ringraum (812/3) vom Kommandoschieber (81) zum vierten Ringraum (832/4) vom Druckabschaltventil (83) und zu je einem seitlichen Eingang beider Wechselventile (96, 97),

– Leitung (819/3) vom sechsten Ringraum (812/6) vom Kommandoschieber (81) zum vierten Ringraum (822/4) vom Druckabschaltventil (82),

– Leitung (829/2) vom dritten Ringraum (822/3) vom Druckabschaltventil (82) zum ersten linksseitigen Ringraum (801) vom Verstellkolben (8),

– Leitung (829/3) vom vierten Ringraum (822/4) vom Druckabschaltventil (82) zum zweiten linksseitigen Ringraum (802) vom Verstellkolben (8),

– Leitung (839/1) vom ersten stirnseitigen Ringraum (831) vom Druckabschaltventil (83) zum dritten rechtsseitigen Ringraum (803/1) vom Verstellkolben (8),

– Leitung (839/2) vom dritten Ringraum (832/3) vom Druckabschaltventil (83) zum ersten rechtsseitigen Ringraum (801/1), vom Verstellkolben (8),

– Leitung (839/3) vom vierten Ringraum (832/4)

vom Druckabschaltventil (83) zum zweiten rechtsseitigen Ringraum (802/1) vom Verstellkolben (8),

– Leitung (939/1) vom dritten Ringraum (932/3) vom Kommandoschieber (93) zum zweiten Ringraum (952/2) vom Druckabschaltventil (95),

– Leitung (939/2) vom sechsten Ringraum (932/6) vom Kommandoschieber (93) zum zweiten Ringraum (942/2) vom Druckabschaltventil (94),

– Leitung (961) von einem seitlichen Eingang des Wechselventils (96) zum dritten Ringraum (911/3) des Steuerschiebers (91),

– Leitung (971) von einem seitlichen Eingang des Wechselventils (97) zum vierten Ringraum (911/4) des Steuerschiebers (91),

– Leitung (949) vom dritten Ringraum (942/3) vom Druckabschaltventil (94) zum linken Ringraum (902) des Verstellkolbens (9),

– Leitung (959) vom dritten Ringraum (952/3) vom Druckabschaltventil (95) zum rechten Ringraum (903) des Verstellkolbens (9),

in die Nut (806) am Verstellkolben (8) greift ein mit einer Hohlwelle (42) fest verbundener Hebel (44) ein, so daß bei der Verschiebung des Verstellkolbens die Hohlwelle (42) definiert in zwei Endstellungen gedreht wird,

in die Nut (904) vom Verstellkolben (9) greift neben dem Umlenkhebel (92) noch ein nicht dargestellter Hebel ein, so daß bei der Verstellung des Dreistellungs-Kolbens (9) die Welle (43) in drei definierte Stellungen verdreht wird, wobei die beiden äußeren Stellungen der Ackergruppe (A) und Rückwärtsganggruppe (R) zugeordnet sind.

6. Schalteinrichtung nach Anspruch 5, dadurch **gekennzeichnet**, daß die Magnetventile (61, 62, 63) der Wähl- und Steuerschieber (7, 91), die Kommandoschieber (81, 93) und die Druckabschaltventile (82, 83, 94, 95) in einem Steuergehäuse (31) angeordnet sind, das mit dem Deckel für die Ölführungskanäle und Wechselventile (96, 97) und dem Schaltgehäuse (41) Bestandteil des Schaltgerätes (3 + 4 + 5) ist, welches an das Wechselgetriebe (1) angeflanscht wird und die Verstellkolben (8, 9) für die hilfskraftbetätigte Gruppenumschaltung wie auch die Wähl- und Schaltübertragungseinrichtung (5) für die handgeschalteten Gänge (G1 bis G4) im Grundgetriebe (11) einschließt.

7. Schalteinrichtung nach Anspruch 6, dadurch **gekennzeichnet**, daß in Verbindung mit dem Wählschieber (7) am elektro-hydraulischen Steuerblock (3) des Schaltgerätes (3 + 4 + 5) und von außen zugänglich zwei mechanisch wirkende Notbetätigungen (71, 72) angeordnet sind, wobei koaxial zum Wählschieber (7) beidseitig in den Abdeckplatten (33) je eine Stellschraube (710) angeordnet und über eine Hülse (711) und eine Sicherung (712) gegen unbeabsichtigte Verdrehung gesichert ist und daß ein der jeweiligen Stellschraube (710) zugeordneter Übertragungsbolzen (713), der in einer abgesetzten Bohrung im jeweiligen äußeren Kolbenschieber (74, 75) über eine zweite Sicherung (714) gegen den Druck einer Feder (715) stirnseitig bündig gehalten wird.

8. Schalteinrichtung nach Anspruch 6, dadurch **gekennzeichnet**, daß in Verbindung mit der Schaltübertragungseinrichtung (5) eine mechanisch-elektrische Anlaßsperre (56) angeordnet ist, wobei an der Welle (54) eine Fläche (560) angearbeitet und in der gleichen Ebene, bis auf diese Fläche, die Hohlwelle (55) geschlitzt – (Schlitz 561) – ist und ein mit einem Schalter (562) zusammenwirkender Fühlbolzen (563) in dem Schlitz (561) angeordnet ist und in der Neutrallage (210) des Schalthebels (23), in der beide Hebel (52, 53) sich in einer mittleren Stellung befinden, bis auf die Fläche (560) im Schlitz hineinragt.

9. Schalteinrichtung nach Anspruch 6, dadurch **gekennzeichnet**, daß zwischen dem Steuergehäuse (31) und dem Deckel (32) des Steuerblockes (3) eine Dichtplatte (35) angeordnet ist und daß in einem definierten Abstand von der Außenkante an den Dichtflächen (37) vom Steuergehäuse (31) und Deckel (32) rundum laufende Entlastungskanäle (38, 39) angeordnet sind, die eine Verbindung zum Innenraum des Schaltgehäuses (41) haben.

10. Schalteinrichtung nach Anspruch 6, dadurch **gekennzeichnet**, daß der Überlauf (46) vom Innenraum (410) des Schaltgehäuses (41) zum Sumpf (13) des Getriebegehäuses (12) hoch, z. B. in Form eines vergrößerten Durchbruches für die Hohlwelle (42), angeordnet ist.

## Claims

1. A gearshift device for a gear-type multiple-ratio transmission (1) of modular design in which not only the gears (G1 to G4) of the main gearbox (11) but also the auxiliary gear groups (S, A, R) are engaged and disengaged by means of gearshift sleeves, with the gears (G1 to G4) formed in the main gearbox (11) being engaged and disengaged mechanically by hand in an H shift pattern (21), and with an additional changeover being effected between two forwards groups (S, A) and a reverse group (R), primarily for agricultural tractors, and with the power- assisted engagement and disengagement of the auxiliary groups being effected by means of positioning pistons (8, 9) and solenoid valves (61, 62, 63) the operation of which is initiated by at least one control member (22) which is arranged on or in association with the manual gearshift lever (23), **characterised** in that an on-road group (S), a field group (A) and a reverse group (R) are engaged and disengaged by means of a single control member (22) which is arranged on the manual gearshift lever (23) and that arranged at the transmission (1) there is a single gearshift unit (3 + 4 + 5) comprising an electro-hydraulic control block (3), a power-assisted actuating means (4) for engaging and disengaging the groups and a motion transmitting means (5) for the gears in the main gearbox (11) which are engaged and disengaged manually according to the H shift pattern.

2. A gearshift device according to claim 1, **characterised** in that solenoid valves (61, 62, 63) are energised and de-energised by the control member (22), by which means a selector valve (7), which is constantly connected to a source of pressurised fluid (64), is moved by said pressurised fluid into one or other end position or into a centre position, and that one solenoid valve (61, 62, 63) is associated with each position of the control member (22) and with each position of the selector valve (7).

3. A gearshift device according to claim 2, **characterised** in that by means of the three-position selector valve (7), a two-position positioning piston (8) for engaging and disengaging the on-road group (S) is directly positioned and a three-position positioning piston (9) for a field group (A), a reverse group (R) and a centre or neutral position is positioned by way of a control valve (91) and a pivoting lever (92).

4. A gearshift device according to claim 3, **characterised** in that
   – the two-position positioning piston (8) is also associated with a command valve (81) and each end position is associated with a respective pressure shut-off valve (82, 83) and
   – the three-position positioning piston (9) is associated with a command valve (93) and each end position is associated with a respective pressure shut-off valve (94, 95) and a respective changeover valve (96, 97) and that when the three-position positioning piston is in its centre position, both changeover valves (96, 97) and both pressure shut-off valves (94, 95) are set so as to vent both outer piston chambers (900, 901).

5. A gearshift device according to claim 4, **characterised** in that the following connections are made by means of pressure lines :
   – lines (65, 66, 67) from the source of pressurised fluid (64) to the solenoid valves (61, 62, 63),
   – lines (68, 69) from the source of pressurised fluid (64) to the fourth (76/4) and eighth (76/8) annular cavities of the selector valve 7,
   – lines (610, 630) from the solenoid valves (61, 63) to the second (76/2) and eleventh (76/11) annular cavities,
   – a line (620) from the solenoid valve (62) to the two end annular cavities (76/1, 76/12) of the selector valve (7),
   – a line (703) from the third annular cavity (76/3) and a line (707) from the seventh annular cavity (76/7) of the selector valve (7) to the seventh annular cavity (932/7) of the command valve (93), to the fourth annular cavity (812/4) of the command valve (81) and to the second annular cavity (911/2) of the control valve 91,
   – a line (704) from the fourth annular cavity (76/4) of the selector valve (7) to the fifth annular cavity (812/5) of the command valve (81),

– a line (705) from the fifth annular cavity (76/5) of the selector valve (7) to the fourth annular cavity (932/4) of the command valve (93) and to the fifth annular cavity (911/5) of the control valve (91),

– a line (709) from the ninth annular cavity (76/9) of the selector valve (7) to the sixth annular cavity (911/6) of the control valve (91),

– a line (819/1) from the first end annular cavity (811) of the command valve (81) to the seventh annular cavity (911/7) of the control valve (91),

– a line (829/1) from the first end annular cavity (821) of the pressure shut-off valve (82) to the first end annular cavity (931) of the command valve (93) and to the third left-hand annular cavity (803) of the positioning piston (8),

– a line (819/2) from the third annular cavity (812/3) of the command valve (81) to the fourth annular cavity (832/4) of the pressure shut-off valve (83) and to one end inlet of each of the two changeover valves (96, 97),

– a line (819/3) from the sixth annular cavity (812/6) of the command valve (81) to the fourth annular cavity (822/4) of the pressure shut-off valve (82),

– a line (829/2) from the third annular cavity (822/3) of the pressure shut-off valve (82) to the first left-hand annular cavity (801) of the positioning piston (8),

– a line (829/3) from the fourth annular cavity (822/4) of the pressure shut-off valve (82) to the second left-hand annular cavity (802) of the positioning piston (8),

– a line (839/1) from the first end annular cavity (831) of the pressure shut-off valve (83) to the third right-hand annular cavity (803/1) of the positioning piston (8),

– a line (839/2) from the third annular cavity (832/3) of the pressure shut-off valve (83) to the first right-hand annular cavity (801/1) of the positioning piston (8),

– a line (839/3) from the fourth annular cavity (832/4) of the pressure shut-off valve (83) to the second right-hand annular cavity (802/1) of the positioning piston (8),

– a line (939/1) from the third annular cavity (932/3) of the command valve (93) to the second annular cavity (952/2) of the pressure shut-off valve (95),

– a line (939/2) from the sixth annular cavity (932/6) of the command valve (93) to the second annular cavity (942/2) of the pressure shut-off calve (94),

– a line (961) from one end inlet of the changeover valve (96) to the third annular cavity (911/3) of the control valve (91),

– a line (971) from one end inlet of the changeover valve (97) to the fourth annular cavity (911/4) of the control valve 91,

– a line (949) from the third annular cavity (942/3) of the pressure shut-off valve (94) to the left-hand annular cavity (902) of the positioning piston (9),

– a line (959) from the third annular cavity (952/3) of the pressure shut-off valve (95) to the right-hand annular cavity (903) of the positioning piston (9),

a lever (44) fixed to a hollow shaft (42) engages in the groove (806) in the positioning piston (8) such that on displacement of the positioning piston, the hollow shaft (42) is rotated in a defined manner into two end positions,

in addition to the pivoting lever (92), another lever which is not illustrated engages in the groove (904) of the positioning piston (9) such that on displacement of the three-position piston (9), the shaft (43) is rotated into three defined positions, with the two extreme positions being associated with the field group (A) and the reverse gear group (R).

6. A gearshift device according to claim 5, **characterised** in that the solenoid valves (61, 62, 63) associated with the selector and control valves (7, 91), the command valves (81, 93) and the pressure shut-off valves (82, 83, 94, 95) are arranged in a control-unit housing (31) which with the cover for the oil ducts and changeover valves (96, 97) and with the shift-unit housing (41) forms part of the gearshift unit (3 + 4 + 5), which is flange-mounted on the multiple-ratio transmission (1) and which includes the positioning pistons (8, 9) for the power-assisted changeover between the auxiliary groups and the selection and shift motion transmitting means (5) for the manually engaged and disengaged gears (G1 to G4) in the main gearbox (11).

7. A gearshift device according to claim 6, **characterised** in that in conjunction with the selector valve (7) two externally accessible mechanically-acting emergency acuators (71, 72) are provided on the electro-hydraulic control block (3) of the gearshift unit (3 + 4 + 5), there being an adjusting screw (710) arranged coaxially with the selector valve (7) at each end in the cover plates (33), each adjusting screw (710) being secured against unintended rotation by means of a bush (711) and a retaining means (712), and that for each respective adjusting screw (710) a thrust transmitting pin (713) is provided which is held flush with the end of a stepped bore in the respective outer piston (74, 75) against the pressure of a spring (715) by a second retaining means (714).

8. A gearshift device according to claim 6, **characterised** in that in conjunction with the shift motion transmitting mechanism (5) a mechanical-electrical engine start inhibitor (56) is provided, there being a flat (560) formed on the shaft (54), and the hollow shaft (55) being slotted (slot 561) at the same level as far as said flat and a feeler pin (563) which acts in conjunction with a switch (562) being arranged in the slot (561) and projecting into the slot as far as the flat (560) when the gearshift lever (23) is in its neutral position (210), in which the two levers (52, 53) are centrally positioned.

9. A gearshift device according to claim 6, **characterised** in that a sealing plate (35) is arranged between the control-unit housing (31) and the cover (32) of the control block (3) and the running around the sealing faces (37) of the control-unit housing (31) and cover (32) at a defined distance from the outer edge, relief ducts (38, 39) are arranged which are connected with the interior of the shift-unit housing (41).

10. A gearshift device according to claim 6, **characterised** in that the overflow (46) from the interior (410) of the shift-unit housing (41) to the sump (13) of the transmission housing (12) is arranged at a high level, e.g. in the form of an enlarged aperture for the hollow shaft (42).


**Revendications**

1. Dispositif d'enclenchement pour une boîte de changement de vitesses à roues dentées (1) disposée suivant le type de construction en groupe dans laquelle les vitesses (G1 à G4) de la boîte de base (11), comme celle de la boîte des groupes (S, A, R) sont enclenchées par l'intermédiaire de manchons d'enclenchement, les vitesses (G1 à G4) constituées dans la boîte de base (11) étant enclenchées mécaniquement à la main dans un diagramme d'enclenchement (21) en H et avec une commutation supplémentaire dans un groupe avec deux vitesses avant (S, A) et une vitesse arrière (R), s'effectuant prioritairement sur un tracteur agricole et que les enclenchements des groupes actionnés par des forces d'assistance sont effectués par l'intermédiaire de pistons de correction (8, 9) et d'électrovalves (61, 62, 63) qui sont déclenchés par au moins un dispositif de réglage (22) disposé sur le levier d'enclenchement manuel (23) ou en liaison avec lui, **caractérisé** par le fait qu'un groupe pour circulation sur route (S), dans les champs (A), de même que le groupe de vitesses de marche AR (R) sont enclenchés seulement avec un dispositif de réglage (22) disposé sur le levier d'enclenchement manuel (23) et que seul un appareil d'enclenchement (3 + 4 + 5) est disposé sur la boîte (1) qui comprend un bloc de commande électrohydraulique (3), un dispositif de réglage (4) actionné par une force auxiliaire pour l'enclenchement des groupes et un dispositif de transmission (5) pour les vitesses enclenchées manuellement dans la boîte de base (11) suivant le diagramme d'enclenchement en H.

2. Dispositif d'enclenchement suivant la revendication 1, **caractérisé** par le fait que les électrovalves (61, 62, 63) sont enclenchées avec le dispositif de réglage (22) par l'intermédiaire desquelles un tiroir sélecteur (7) relié en permanence à une source de fluide sous pression (64) est chaque fois repoussé dans une position de fin de course ou médiane et qu'une électrovalve (61, 62, 63) est chaque fois attribuée à la position du dispositif de réglage (22) et du tiroir sélecteur (7).

3. Dispositif d'enclenchement suivant la revendication 2, **caractérisé** par le fait qu'un piston de réglage (8) à deux positions pour l'enclenchement et le désenclenchement du groupe de circulation sur route (S) est réglé directement par l'intermédiaire du tiroir sélecteur (7) à trois positions et qu'un piston de réglage (9) à trois positions pour un groupe de vitesse sur champs (A) et de marche AR (R), de même qu'une position médiane ou zéro, sont réglés par un tiroir de commande (91) et un levier de renvoi (92).

4. Dispositif d'enclenchement suivant la revendication 3, **caractérisé** par le fait que
– au piston de réglage à deux positions (8) est encore attribué un tiroir de commande (81) et à chaque position de fin de course une valve de décharge (82, 83) et
– au piston de réglage à trois positions (9) est attribué un tiroir de commande (93) et à chaque position de fin de course une valve de décharge (94, 95) et une valve de renversement (96, 97) et que pour la purge des deux chambres de piston extérieures (900, 901) en position médiane les deux valves de renversement (96, 97) et de décharge (94, 95) sont enclenchées.

5. Dispositif d'enclenchement suivant la revendication 4, **caractérisé** par le fait que, grâce à des conduites sous pression, on dispose des liaisons suivantes :
– les conduites (65, 66, 67) de la source du fluide sous pression (64) vers les électrovalves (61, 62, 63),
– les conduites (68, 69) de la source du fluide sous pression (64) vers le quatrième (76/4) et le huitième (76/8) compartiment annulaire du tiroir sélecteur (7),
– les conduites (610, 630) des électrovalves (61, 63) au deuxième (76/2) et au onzième compartiment annulaire (76/11),
– la conduite (620) de l'électrovalve (62) aux deux compartiments annulaires côte frontal (76/1, 76/12) du tiroir sélecteur (7),
– la conduite (703) du troisième compartiment annulaire (76/3) et la conduite (707) du septième compartiment annulaire (76/7) du tiroir sélecteur (7) au septième compartiment annulaire (932/7) du tiroir de commande (93), au quatrième compartiment annulaire (812/4) du tiroir de commande (81) et au deuxième compartiment annulaire (911/2) du tiroir de contrôle (91),
– la conduite (704) du quatrième compartiment annulaire (76/4) du tiroir sélecteur (7) au cinquième compartiment annulaire (812/5) du tiroir de commande (81),
– la conduite (705) du cinquième compartiment annulaire (76/5) du tiroir sélecteur (7) au quatrième compartiment annulaire (932/4) du tiroir de commande (93) et au cinquième compartiment annulaire (911/5) du tiroir de contrôle (91),

– la conduite (709) du neuvième compartiment annulaire (76/9) du tiroir sélecteur (7) au sixième compartiment annulaire (911/6) du tiroir de commande (91),

– la conduite (819/1) du premier compartiment annulaire (811) côté frontal du tiroir de commande (81) au septième compartiment annulaire (911/7) du tiroir de commande (91),

– la conduite (829/1) du premier compartiment annulaire côté frontal (821) de la valve de décharge (82) au premier compartiment annulaire côté frontal (931) du tiroir de commande (93) et au troisième compartiment annulaire (803) côté gauche du piston de réglage (8),

– la conduite (819/2) du troisième compartiment annulaire (812/3) du tiroir de commande (81) au quatrième compartiment annulaire (832/4 de la valve de décharge (83) et chaque fois à une entrée latérale des deux valves de renversement (96, 97),

– la conduite (819/3) du sixième compartiment annulaire (812/6) du tiroir de commande (81) au quatrième compartiment annulaire (822/4) de la valve de décharge (82),

– la conduite (829/2) du troisième compartiment annulaire (822/3) de la valve de décharge (82) au premier compartiment annulaire (801) côté gauche du piston de réglage (8),

– la conduite (829/3) du quatrième compartiment annulaire (822/4) de la valve de décharge (82) au deuxième compartiment annulaire (802) côté gauche du piston de réglage (8),

– la conduite (839/1) du premier compartiment annulaire (831) côté frontal de la valve de décharge (83) au troisième compartiment annulaire (803/1) côté droit du piston de réglage (8),

– la conduite (839/2) du troisième compartiment annulaire (832/3) de la valve de décharge (83) au premier compartiment annulaire (801/1) côté droit du piston de réglage (8),

– la conduite (839/3) du quatrième compartiment annulaire (832/4) de la valve de décharge (83) au deuxième compartiment annulaire côté droit (802/1) du piston de réglage (8),

– la conduite (939/1) du troisième compartiment annulaire (932/3) du tiroir de commande (93) au deuxième compartiment annulaire (952/2 de la valve de décharge (95),

– la conduite (939/2) du sixième compartiment annulaire (932/6) du tiroir de commande (93) au deuxième compartiment annulaire (942/2 de la valve de décharge (94),

– la conduite (961) d'une entrée latérale de la valve de renversement (96) au troisième compartiment (911/3) annulaire (911/3) du tiroir de contrôle (91),

– la conduite (971) d'une entrée latérale de la valve de renversement (97) au quatrième compartiment annulaire (911/4) du tiroir de contrôle (91),

– la conduite (949) du troisième compartiment annulaire (942/3) de la valve de décharge (94) au compartiment annulaire gauche (902) du piston de commande (9),

– la conduite (959) du troisième compartiment annulaire (952/3) de la valve de décharge (95) au compartiment annulaire droit (903) du piston de réglage (9),

un levier (44) fixé à demeure avec un arbre creux (42) engrène dans la rainure (806) sur le piston de réglage (8) de telle manière que l'arbre creux (42), lors du déplacement du piston de commande, est tourné de façon définie dans deux positions de fin de course, outre le levier de renvoi (92), un levier non représenté engrène encore dans la rainure (904) du piston de réglage (9) de telle manière que, lors du réglage du piston à trois positions (9), l'arbre (43) est tourné dans trois positions définies, les deux positions extérieures étant attribuées au groupe champs (A) et au groupe de vitesse arrière (R).

6. Dispositif d'enclenchement suivant la revendication 5, **caractérisé** par le fait que les électrovalves (61, 62, 63) des tiroirs sélecteur et de contrôle (7, 91), les tiroirs de commande (81, 93) et les valves de décharge (82, 83, 94, 95) sont disposés dans un carter de commande (31) qui, avec le couvercle pour les canaux de conduite d'huile et pour les valves de renversement (96, 97), fait partie intégrante de l'appareil d'enclenchement (3 + 4 + 5), lequel appareil est bridé à la boîte de changement de vitesse (1) et qui comprend les pistons de réglage (8, 9) pour la commutation des groupes actionnée par une force auxiliaire ainsi que les dispositifs de sélection et de transmission de l'enclenchement (5) pour les vitesses à commande manuelle (G1 à G4) dans la boîte de base (11).

7. Dispositif d'enclenchement suivant la revendication 6, **caractérisé** par le fait que, en liaison avec le tiroir sélecteur (7), deux dispositifs d'actionnement de secours (71, 72) à fonctionnement mécanique sont disposés sur le bloc de commande électrohydraulique (3) de l'appareil d'enclenchement (3 + 4 + 5) et accessibles de l'extérieur, sachant qu'une vis de réglage (710) disposée coaxialement au tiroir sélecteur (7) des deux côtés des plaques de recouvrement (33) et bloquée par un manchon (711) et un dispositif de sécurité (712) pour éviter les rotations involontaires et qu'un axe de transmission (713) attribué à chaque vis de réglage (710), placé dans un perçage étagé logé dans chaque tiroir extérieur de piston (74, 75), est maintenu à ras du front par l'intermédiaire d'un deuxième dispositif de sécurité (714) contre la pression d'un ressort (715).

8. Dispositif d'enclenchement suivant la revendication 6, **caractérisé** par le fait qu'un verrou de démarrage (56) mécano-électrique est disposé en liaison avec le dispositif de transmission d'enclenchement (5), sachant qu'une surface (560) est usinée sur l'arbre (54) et qu'au même niveau, jusqu'à cette surface, l'arbre creux (55) est fendu − (fente 561) − et qu'un axe palpeur (563), agissant communément avec un interrupteur (562) est disposé dans la fente (561) et que, dans la position neutre (210) du levier d'enclenchement (23), position dans laquelle les deux leviers (52, 53) se trouvent dans une position médiane, il pénètre dans la fente jusqu'à la surface (560).

9. Dispositif d'enclenchement suivant la revendication 6, **caractérisé** par le fait qu'une plaque d'étanchéité (35) est disposée entre le carter de commande (31) et le couvercle (32) du bloc de commande (3) et qu'il y a des canaux de décharge (38, 39) ayant une liaison vers l'intérieur du carter d'enclenchement (41) tout autour des surfaces d'étanchéité (37) du carter de commande (31) et du couvercle (32), à une distance bien définie de l'arrête extérieure.

10. Dispositif d'enclenchement suivant la revendication 6, **caractérisé** par le fait que le trop-plein (46) est disposé de l'intérieur (410) du carter d'enclenchement (41) vers le collecteur de barbotage (13) du carter de la boîte de vitesses (12) en hauteur, par ex. sous forme d'un passage agrandi pour l'arbre creux (42).

FIG.2

FIG.1

FIG. 3

EP 0 367 768 B1

FIG.3A

14

FIG.4

EP 0 367 768 B1

FIG. 5

EP 0 367 768 B1